(19) Europäisches Patentamt
European Patent Office
Office européen des brevets

(11) **EP 2 896 726 A1**

(12) **EUROPEAN PATENT APPLICATION**
published in accordance with Art. 153(4) EPC

(43) Date of publication:
**22.07.2015 Bulletin 2015/30**

(21) Application number: **13837057.2**

(22) Date of filing: **12.09.2013**

(51) Int Cl.:
***D01F 8/14*** *(2006.01)*

(86) International application number:
**PCT/JP2013/074730**

(87) International publication number:
**WO 2014/042222 (20.03.2014 Gazette 2014/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.09.2012 JP 2012203035**

(71) Applicant: **Kureha Corporation**
**Tokyo 103-8552 (JP)**

(72) Inventors:
• **TAKAHASHI Takeo**
**Tokyo 103-8552 (JP)**
• **CHIBA Yukitoshi**
**Tokyo 103-8552 (JP)**
• **YAMAZAKI Masahiro**
**Tokyo 103-8552 (JP)**
• **SATO Hiroyuki**
**Tokyo 103-8552 (JP)**

(74) Representative: **Zimmermann & Partner Patentanwälte mbB**
**Postfach 330 920**
**80069 München (DE)**

(54) **WATER-DISINTEGRATING COMPOSITE FIBER AND METHOD FOR PRODUCING SAME**

(57) A water-disintegrable composite fiber comprising a phase containing a polyglycolic acid resin and a phase containing a polylactic acid resin with a D-lactic acid unit ratio of at least 1.0%; the two phases extending continuously in a lengthwise direction; and the composite fiber having a cross sectional area formed by the phase containing the polyglycolic acid resin having an area ratio of at most 50%; and the content of the polyglycolic acid resin being from 2 to 100 parts by mass per 1 part by mass of the D-lactic acid units in the polylactic acid resin.

EP 2 896 726 A1

**Description**

TECHNICAL FIELD

The present invention relates to a water-disintegrable composite fiber and a method for producing the same, and particularly to a water-disintegrable composite fiber containing a polyglycolic acid resin and a polylactic acid resin and a method for producing the same.

BACKGROUND ART

In drilling techniques such as those used in gas fields or oil fields, short fibers are added to a well treatment fluid so as to prevent the backflow of proppants inside the well (for example, see Japanese Unexamined Patent Application Publication (Translation of PCT Application) No. 2011-506791 (Patent Document 1)). However, conventional short fibers added to a well treatment fluid consist of a resin such as a polyamide or polyolefin which is hardly decomposed in the ground, resulting in the problem that the short fibers remain in the ground after well treatment. Therefore, in recent years, the use of fibers consisting of a biodegradable resin as short fibers for a well treatment fluid has been investigated from the perspective of reducing the environmental burden.

On the other hand, fibers consisting of a polylactic acid resin or a polyglycolic acid resin are known as fibers having biodegradability or bioabsorbability and have been conventionally used as surgical sutures and the like in the medical field. With the objective of reducing the environmental burden, the applications of such fibers have been expanded not only to the medical field but also to a wide range of fields, such as fibers to be used in industrial materials, sanitary materials, and lifestyle materials. However, single fibers of a polylactic acid resin or a polyglycolic acid resin cannot necessarily be considered to have sufficient water disintegrability or mechanical characteristics, and the conjugation of single fibers with various resins has been studied (for example, Japanese Unexamined Patent Application Publication No. H07-133511 (Patent Document 2), Japanese Unexamined Patent Application Publication No. 2000-265333 (Patent Document 3), and Japanese Unexamined Patent Application Publication No. 2007-119928 (Patent Document 4)).

CITATION LIST

Patent Documents

Patent Document 1: Japanese Unexamined Patent Application Publication (Translation of PCT Application) No. 2011-506791
Patent Document 2: Japanese Unexamined Patent Application Publication No. H07-133511A
Patent Document 3: Japanese Unexamined Patent Application Publication No. 2000-265333A
Patent Document 4: Japanese Unexamined Patent Application Publication No. 2007-119928A

SUMMARY OF INVENTION

Technical Problem

Polylactic acid resin fibers exhibit good water disintegrability at relatively high temperatures of 80°C or higher. When short fibers consisting of such a polylactic acid resin are added to a well treatment fluid, proppants in the well treatment fluid tend to settle, and it has been difficult to obtain a well treatment fluid with excellent proppant dispersibility.

The present invention was conceived in light of the problem of the conventional technology described above, and an objective of the present invention is to provide a water-disintegrable composite fiber capable of maintaining high proppant dispersibility in a well treatment fluid and a method for producing the fiber.

Solution to Problem

As a result of conducting extensive research in order to achieve the object described above, the present inventors discovered that the dispersibility of proppants is reduced in a well treatment fluid to which short fibers consisting of a polylactic acid resin have been added, because the diameter of the polylactic acid resin short fibers is large and the contact area between fibers and proppants is small. In addition, the present inventors discovered that polylactic acid resin fibers cannot be drawn at a high draw ratio and that it is difficult to obtain polylactic resin fibers with a small diameter. Further, the present inventors discovered that when the content of D-lactic acid units (hereafter abbreviated as the "D-form ratio") in the polylactic acid resin is increased in order to improve the water disintegrability of the polylactic acid resin short fibers, yarn breakage occurs more prominently when drawn.

As a result of conducting further research based on such knowledge, the present inventors discovered that by including a prescribed amount of a polyglycolic acid resin with respect to the D-lactic acid units in a water-disintegrable composite undrawn yarn comprising a phase containing a polyglycolic acid resin and a phase containing a polylactic acid resin having D-lactic acid units, it is possible to draw the composite undrawn yarn at a high draw ratio and it is possible to obtain a water-disintegrable composite drawn yarn with a small diameter, and the present inventors thereby completed the present invention.

That is, the water-disintegrable composite fiber of the present invention is an undrawn or a drawn fiber comprising a phase containing a polyglycolic acid resin and a phase containing a polylactic acid resin with a D-lactic acid unit ratio of at least 1.0%; the two phases being respectively continuous in the length direction; a region formed by the phase containing the polyglycolic acid resin having a cross section with an area ratio of at most 50%; and the content of the polyglycolic acid resin being from 2 to 100 parts by mass per 1 part by mass of the D-lactic acid units in the polylactic acid resin.

Such a water-disintegrable composite fiber preferably further has a side surface in which the region formed by the phase containing the polyglycolic acid resin has an area ratio of at most 50%. In addition, the fiber structure is preferably at least one type selected from a core-sheath type, a multicore type, a side-by-side type, a multiple division type, a multilayer type, and a radial type structure. Further, the single fiber fineness of the drawn water-disintegrable composite fiber is preferably at most 3.0 denier.

In addition, fibers of various structures such as hollow fibers or ultrafine fibers can be obtained by removing either the polyglycolic acid resin or the polylactic acid resin from the water-disintegrable composite fiber of the present invention, and a water-disintegrable composite staple fiber can be obtained by cutting the water-disintegrable composite fiber of the present invention. This water-disintegrable composite staple fiber can be suitably used as an additive at the time of oil or gas drilling.

The method for producing the water-disintegrable composite fiber of the present invention is a method comprising the steps of forming a fibrous composite by continuously discharging a polylactic acid resin having a D-lactic acid unit ratio of at least 1.0% and from 2 to 100 parts by mass of a polyglycolic acid resin per 1 part by mass of D-lactic acid units in the polylactic acid resin from a spinneret for composite fibers, each being discharged in a molten state and cooling the fibrous composite to obtain an undrawn yarn comprising a phase containing the polyglycolic acid resin and a phase containing the polylactic acid resin, the undrawn yarn having a cross section in which the region formed by the phase containing the polyglycolic acid resin has an area ratio of at most 50%.

In addition, in the method for producing the water-disintegrable composite fiber of the present invention, the undrawn yarn may be drawn so as to obtain a drawn yarn comprising the phase containing the polyglycolic acid resin and the phase containing the polylactic acid resin, the drawn yarn having a cross section in which the region formed by the phase containing the polyglycolic acid resin has an area ratio of at most 50%, and the drawn yarn containing from 2 to 100 parts by mass of the polyglycolic acid resin per 1 part by mass of the D-lactic acid units in the polylactic acid resin.

The reason that including a prescribed amount of a polyglycolic acid resin with respect to the D-lactic acid units in the polylactic acid resin makes it possible to draw a water-disintegrable composite undrawn yarn comprising a phase containing the polyglycolic acid resin and a phase containing the polylactic acid resin at a high draw ratio is not absolutely certain, but the present inventors speculate as follows. Specifically, in a single fiber of a polylactic acid resin with a high D-form ratio, oriented crystallization caused by drawing is unlikely to occur due to the crystallization resistant properties of polylactic acid resins with a high D-form ratio, and it is thus speculated that the so-called necking phenomenon is unlikely to occur. When the diameter is reduced by drawing a fiber which is unlikely to be subjected to the necking phenomenon due to drawing at a high draw ratio, stress is concentrated in portions where the fiber diameter is small, in particular, so it is speculated that fiber breaks when drawing is continued. In addition, such a phenomenon is speculated to occur more prominently as the D-form ratio of the polylactic acid resin increases.

In contrast, in the water-disintegrable composite fiber of the present invention, the polyglycolic acid resin is easily subjected to the necking phenomenon due to drawing, so the low orientation of the polylactic acid resin is compensated by the high orientation of the polyglycolic acid resin. Therefore, the concentration of stress is unlikely to occur even when drawn at a high draw ratio, and it is speculated that this is why fiber is unlikely to break.

Advantageous Effects of Invention

With the present invention, it is possible to obtain a water-disintegrable composite fiber capable of maintaining high proppant dispersibility in a well treatment fluid.

BRIEF DESCRIPTION OF DRAWINGS

FIG. 1A is a schematic view illustrating a preferred embodiment of the structure of a concentric core-sheath type water-disintegrable composite fiber of the present invention.

FIG. 1B is a schematic view illustrating a preferred embodiment of the structure of an eccentric core-sheath type water-disintegrable composite fiber of the present invention.

FIG. 1C is a schematic view illustrating a preferred embodiment of the structure of a multicore type water-disintegrable composite fiber of the present invention.

FIG. 1D is a schematic view illustrating a preferred embodiment of the structure of a side-by-side type water-disintegrable composite fiber of the present invention.

FIG. 1E is a schematic view illustrating a preferred embodiment of the structure of a multiple-division type water-disintegrable composite fiber of the present invention.

FIG. IF is a schematic view illustrating a preferred embodiment of the structure of a multilayer type water-disintegrable composite fiber of the present invention.

FIG. 1G is a schematic view illustrating a preferred embodiment of the structure of a radial type water-disintegrable composite fiber of the present invention.

FIG. 2 is a schematic view illustrating a melt spinning device used in the working examples and comparative examples.

FIG. 3 is a schematic view illustrating a drawing device used in the working examples and comparative examples.

DESCRIPTION OF EMBODIMENTS

The present invention will be described in detail hereafter using preferred embodiments thereof.

The water-disintegrable composite fiber of the present invention comprises a phase containing a polyglycolic acid resin (abbreviated as a "PGA resin phase" hereafter) and a phase containing a polylactic acid resin with a D-lactic acid unit ratio (D-form ratio) of at least 1.0% (abbreviated as a "PLA resin phase" hereafter). First, the polylactic acid resin and the polyglycolic acid resin used in the present invention will be described.

(Polylactic acid resin)

The polylactic acid resin (abbreviated as the "PLA resin" hereafter) used in the present invention contains D-lactic acid units in an amount of at least 1.0%. Specific examples include poly-DL lactic acids with a D-form ratio of at least 1.0% (copolymers of D-lactic acid and L-lactic acid (including ring-opened polymers of D/L-lactides, which are bimolecular cyclic esters of D-lactic acid and L-lactic acid), abbreviated as "PDLLA resins" hereafter) and poly-D lactic acids (homopolymers of D-lactic acid (including ring-opened polymers of D-lactides, which are bimolecular cyclic esters of D-lactic acid), abbreviated as "PDLA resins" hereafter) and the like.

When the D-form ratio of the PLA resin is less than 1.0%, the water disintegrability (mass loss) of the PLA resin phase decreases, and the water disintegrability (mass loss) of the composite fiber also decreases. In the present invention, the D-form ratio of the PLA resin is preferably at least 1.2% from the perspective that the water disintegrability of the PLA resin phase increases. In addition, the upper limit of the D-form ratio of the PLA resin is not particularly limited but is preferably at most 30% and more preferably at most 15% from the perspective of ensuring that the action due to the polyglycolic acid resin described below is sufficiently expressed.

Further, the melt viscosity of the PLA resin (temperature: 240°C, shear rate: 122 sec$^{-1}$) is preferably from 1 to 10,000 Pa•s, more preferably from 20 to 6,000 Pa•s, and particularly preferably from 50 to 4,000 Pa•s. When the melt viscosity is less than the lower limit described above, the spinnability is diminished and the fiber tends to have break in some parts, whereas when the melt viscosity exceeds the upper limit described above, it tends to become difficult to discharge the PLA resin in a molten state.

In the present invention, such a PLA resin may be used alone, and various additives such as thermal stabilizers, end-capping agents, plasticizers, and UV absorbers or other thermoplastic resins may be added as necessary and used as a PLA resin composition.

(Polyglycolic acid resin)

The polyglycolic acid resin (abbreviated as "PGA resin" hereafter) used in the present invention is a glycolic acid homopolymer consisting of repeating units of a glycolic acid represented by the following formula (1) (abbreviated as "PGA homopolymer" hereafter; including glycolide ring-opened polymers, which are bimolecular cyclic esters of glycolic acids):

-[O-CH$_2$-C(=O)]-            (1)

Such a PGA resin can be synthesized by the dehydration polycondensation of a glycolic acid, de-alcohol polycondensation of a glycolic acid alkyl ester, the ring-opening polymerization of a glycolide, or the like. Of these, the PGA homopolymer is preferably synthesized by the ring-opening polymerization of a glycolide. In addition, such ring-opening polymerization can be performed by bulk polymerization or solution polymerization.

Examples of catalysts used when producing the PGA resin by the ring-opening polymerization of a glycolide include publicly known ring-opening polymerization catalysts such as tin compounds such as tin halide and organic tin carboxylate; titanium compounds such as alkoxy titanate; aluminum compounds such as alkoxyaluminum; zirconium compounds such as zirconium acetyl acetone; and antimony compounds such as antimony halide and antimony oxide.

The PGA resin can be produced by a conventionally known polymerization method, but the polymerization temperature is preferably from 120 to 300°C, more preferably from 130 to 250°C, and particularly preferably from 140 to 220°C. When the polymerization temperature is less than the lower limit described above, polymerization tends to not progress sufficiently, whereas when the polymerization temperature exceeds the upper limit described above, the resin that is produced tends to be pyrolyzed.

The polymerization time of the PGA resin is preferably from 2 minutes to 50 hours, more preferably from 3 minutes to 30 hours, and particularly preferably from 5 minutes to 18 hours. When the polymerization time is less than the lower limit described above, polymerization tends to not progress sufficiently, whereas when the polymerization time exceeds the upper limit described above, the resin that is produced tends to be discolored.

The weight average molecular weight of such a PGA resin is preferably from 50,000 to 800,000, and more preferably from 80,000 to 500,000. When the weight average molecular weight of the PGA resin is less than the lower limit described above, the mechanical strength of the resulting composite fiber tends to be diminished, whereas when the weight average molecular weight exceeds the upper limit described above, it tends to become difficult to discharge the PGA resin in a molten state. The weight average molecular weight is a value in terms of polymethyl methacrylate measured by gel permeation chromatography (GPC).

In addition, the melt viscosity of the PGA resin (temperature: 240°C, shear rate: 122 sec$^{-1}$) is preferably from 1 to 10,000 Pa•s, more preferably from 50 to 6,000 Pa•s, and particularly preferably from 100 to 4,000 Pa•s. When the melt viscosity is less than the lower limit described above, the spinnability is diminished and the fiber tends to break in some parts, whereas when the melt viscosity exceeds the upper limit described above, it tends to become difficult to discharge the PGA resin in a molten state.

In the present invention, such a PGA resin may be used alone, and various additives such as thermal stabilizers, end-capping agents, plasticizers, and UV absorbers or other thermoplastic resins may be added as necessary and used as a PGA resin composition.

In addition, in the present invention, a polyglycolic acid copolymer comprising repeating units of a glycolic acid represented by the aforesaid formula (1) (abbreviated as a "PGA copolymer" hereafter) may also be used instead of such a polyglycolic acid resin.

The PGA copolymer described above can be synthesized by using a comonomer in a polycondensation reaction or ring-opening polymerization reaction for synthesizing a PGA homopolymer. Examples of such a comonomer include cyclic monomers such as ethylene oxalate (i.e. 1,4-dioxane-2,3-dione), lactides, lactones (e.g. β-propiolactone, β-butyrolactone, β-pivalolactone, γ-butyrolactone, δ-valerolactone, β-methyl-δ-valerolactone, ε-caprolactone, and the like), carbonates (e.g. trimethylene carbonate and the like), ethers (e.g. 1,3-dioxane and the like), ether esters (e.g. dioxanone and the like), and amides (e.g. ε-caprolactam and the like); hydroxycarboxylic acids such as lactic acid, 3-hydroxypropanoic acid, 3-hydroxybutanoic acid, 4-hydroxybutanoic acid, 6-hydroxycaproic acid, and the alkylesters thereof; mixtures containing substantially equimolar amounts of aliphatic diols, such as ethylene glycol and 1,4-butanediol, and aliphatic dicarboxylic acids, such as succinic acid and adipic acid, or the alkyl esters thereof. One type of these comonomers may be used alone or two or more types of these comonomers may be used in combination.

<Water-disintegrable composite fiber>

Next, the water-disintegrable composite fiber of the present invention will be described. The water-disintegrable composite fiber of the present invention is an undrawn or a drawn yarn comprising a phase containing a PGA resin (PGA resin phase) and a phase containing a PLA resin with a D-form ratio of at least 1.0% (PLA resin phase); the two phases being respectively continuous in the length direction of the fiber; the composite fiber having a cross sectional area partly formed by the PGA resin phase having an area ratio of at most 50%; and the fiber containing from 2 to 100 parts by mass of the PGA resin per 1 part by mass of the D-lactic acid units in the PLA resin.

When the content of the PGA resin per 1 part by mass of the D-lactic acid units in the PLA resin is less than 2 parts by mass, the undrawn yarn cannot be drawn at a high draw ratio, which makes it difficult to form a drawn yarn with a small single fiber fineness and reduces the proppant dispersibility by the drawn composite fiber. On the other hand, when the PGA resin content exceeds 100 parts by mass, the proportion of the PLA resin is small, so the characteristics of the PLA resin cannot be sufficiently expressed. Moreover, at a relatively high temperature, specifically 60°C or higher, the rate of water disintegration of the composite fiber becomes very high, and the use of the fiber becomes difficult. In the present invention, the PGA resin content is preferably from 3 to 100 parts by mass and more preferably from 5 to 80 parts by mass per 1 part by mass of the D-lactic acid units in the PLA resin from the perspective of obtaining a drawn composite fiber with a small single fiber fineness when the undrawn yarn is drawn at a high draw ratio, excellent proppant dispersibility, and excellent water disintegrability at a relatively high temperature of 60°C or higher.

The content of the PGA resin in the component constituting the PGA resin phase is preferably at least 60 mass%, more preferably at least 80 mass%, even more preferably at least 95 mass%, and particularly preferably 100%. In addition, the content of the PLA resin in the component constituting the PLA resin phase is preferably at least 60 mass%, more preferably at least 80 mass%, even more preferably at least 95 mass%, and particularly preferably 100%.

In the cross section of the water-disintegrable composite fiber of the present invention, the area formed from the PGA resin phase is 50% or less in terms of area ratio. When the area ratio of the region formed by the PGA resin phase in the cross section exceeds 50%, the proportion of the PLA resin is small, so the characteristics of the PLA resin cannot be sufficiently expressed, and the water disintegrability (mass loss) of the composite fiber at a relatively high temperature of 60°C or higher decreases. In the present invention, the area ratio of the region formed by the PGA resin phase in the cross section is preferably at most 40% from the perspective that the water disintegrability (mass loss) of the composite fiber at a relatively high temperature of 60°C or higher improves. In addition, the lower limit of the area ratio of the region formed by the PGA resin phase in the cross section of the water-disintegrable composite fiber of the present invention is preferably at least 1%, more preferably at least 5%, even more preferably at least 10%, and particularly preferably at least 15%. When the area ratio of the region formed by the PGA resin phase in the cross section is less than the lower limit described above, the characteristics of the PGA resin cannot be sufficiently expressed, so the undrawn yarn cannot be drawn at a high draw ratio, which makes it difficult to form a drawn yarn with a small single fiber fineness and tends to diminish the proppant dispersibility of the composite fiber (drawn yarn). Further, the water disintegrability (mass loss) of the composite fiber at around 60°C tends to decrease.

In addition, the area ratio of the region formed by the PGA resin phase on the side surface of the water-disintegrable composite fiber of the present invention is preferably at most 50%, more preferably at most 30%, even more preferably at most 15%, and particularly preferably at most 10%. When the area ratio of the region formed by the PGA resin phase on the side surface exceeds the upper limit described above, the undrawn yarn is prone to agglutination, and the unwindability after storage, particularly at high temperature and high humidity (for example, at a temperature of 40°C and relative humidity of 80%RH), tends to be diminished. In addition, it is particularly preferable for the region formed from the PGA resin phase not to be exposed to the side surface of the water-disintegrable composite fiber of the present invention, so the lower limit of the area ratio is particularly preferably 0% or higher.

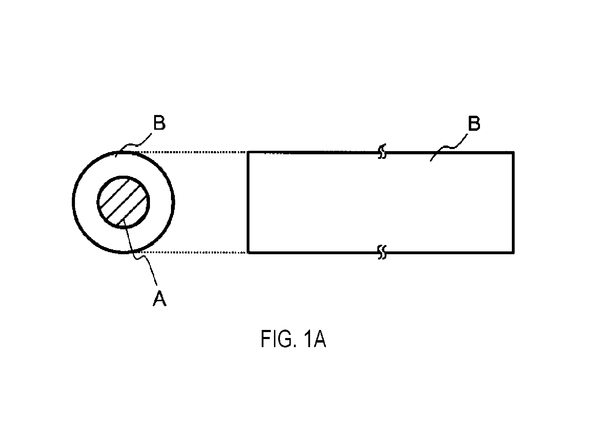

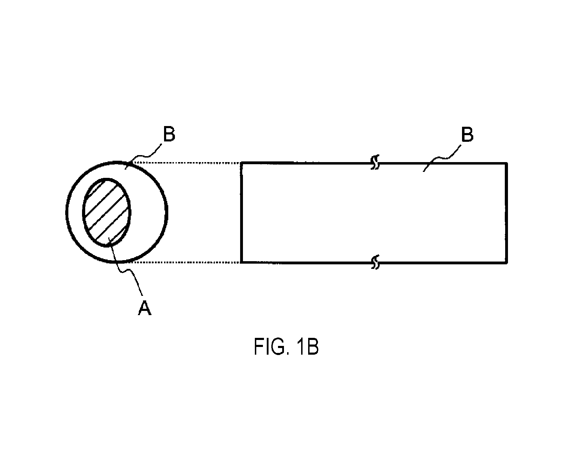

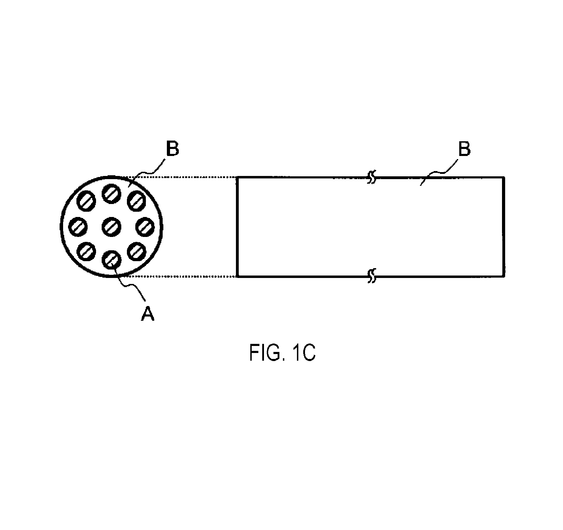

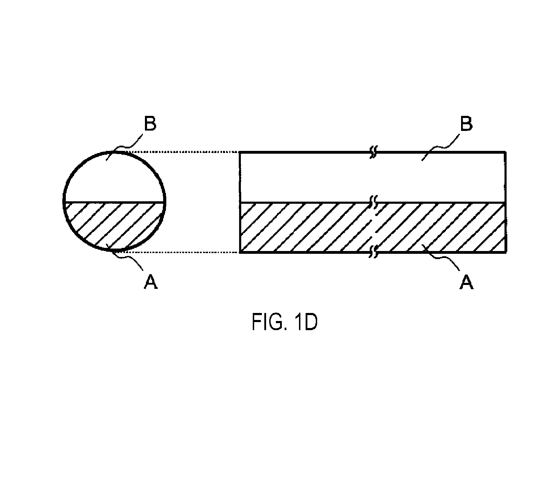

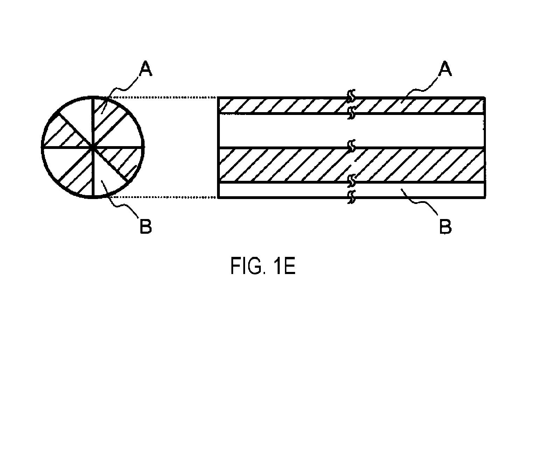

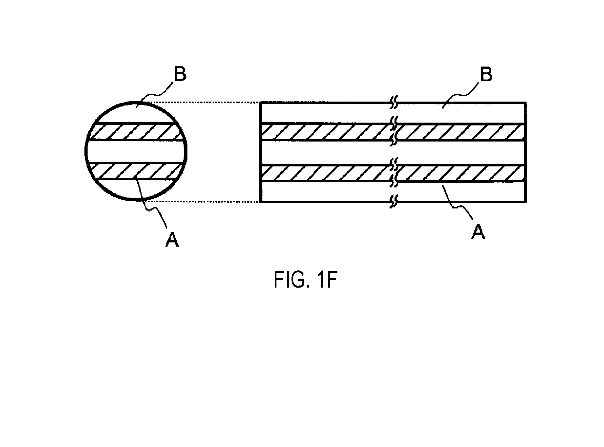

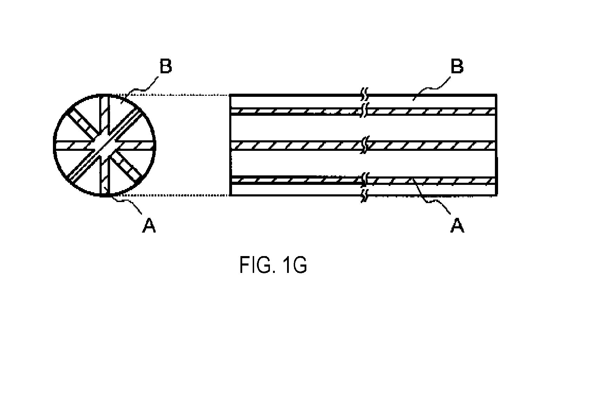

Specific examples of fiber structures of the water-disintegrable composite fiber of the present invention include a concentric core-sheath type structure (see FIG. 1A), an eccentric core-sheath type structure (see FIG. 1B), a multicore type structure (see FIG. 1C), a side-by-side type structure (see FIG. 1D), a multiple-division type structure (see FIG. IE), a multilayer type structure (see FIG. 1F), a radial type structure (see FIG. 1G), and composite structures combining two or more types thereof. In FIGS. 1A to 1G, the left figure is a schematic view of the cross section of the composite fiber, and the right figure is a schematic view of the side surface. In addition, in FIGS. 1A to 1G, A represents the PGA resin phase, and B represents the PLA resin phase. Of these fiber structures, a concentric core-sheath structure, an eccentric core-sheath structure, or a multicore structure is preferable from the perspective that the undrawn yarn has excellent unwindability, the fiber is unlikely to break when drawn and that the drawn yarn has a small single fiber fineness and excellent proppant dispersibility.

In such a water-disintegrable composite fiber of the present invention, the mass loss of the drawn yarn when immersed for 14 days in water at 60°C and 80°C is preferably at least 10%, more preferably at least 15%, even more preferably at least 20%, yet even more preferably at least 25%, and particularly preferably at least 30%. When the mass loss is less than the lower limit described above, the fiber is not sufficiently hydrolyzed and may remain in the ground after well treatment when added to a well treatment fluid as a short fiber. The upper limit of the mass loss described above is not particularly limited and is preferably 100% or less, but the upper limit may also be 95% or less.

In addition, as described above, since the undrawn yarn can be drawn at a high draw ratio, this can be drawn to obtain a drawn yarn with a single fiber fineness of preferably at most 3.0 denier, more preferably at most 2.0 denier, and particularly preferably at most 1.5 denier. Such a draw yarn has a very small diameter and thus excellent proppant dispersibility.

<Method of producing the water-disintegrable composite fiber>

Next, a preferred embodiment of the method of producing the water-disintegrable composite fiber of the present invention will be described with reference to the drawings, but the method of producing the water-disintegrable composite fiber of the present invention is not limited to these drawings. In the following explanations and drawings, elements that are identical or equivalent are labeled with the same symbols, and duplicate explanations will be omitted.

In the method for producing the water-disintegrable composite fiber of the present invention, a PGA resin in a molten state and a PLA resin in a molten state (having a prescribed D-form ratio) are continuously discharged from a spinneret for composite fibers at a prescribed ratio so as to form a fibrous composite (discharge step). At this time, the resulting fibrous composite may be held in an atmosphere at a prescribed temperature for a prescribed amount of time after being discharged as necessary (heat retaining step). The fibrous composite is then cooled by a known cooling method such as air cooling to obtain an undrawn yarn (cooling step). In the method of producing the water-disintegrable composite fiber of the present invention, the undrawn yarn may be mass-produced and stored (storage step) and subjected to drawing processing as necessary to obtain a drawn yarn (drawing step).

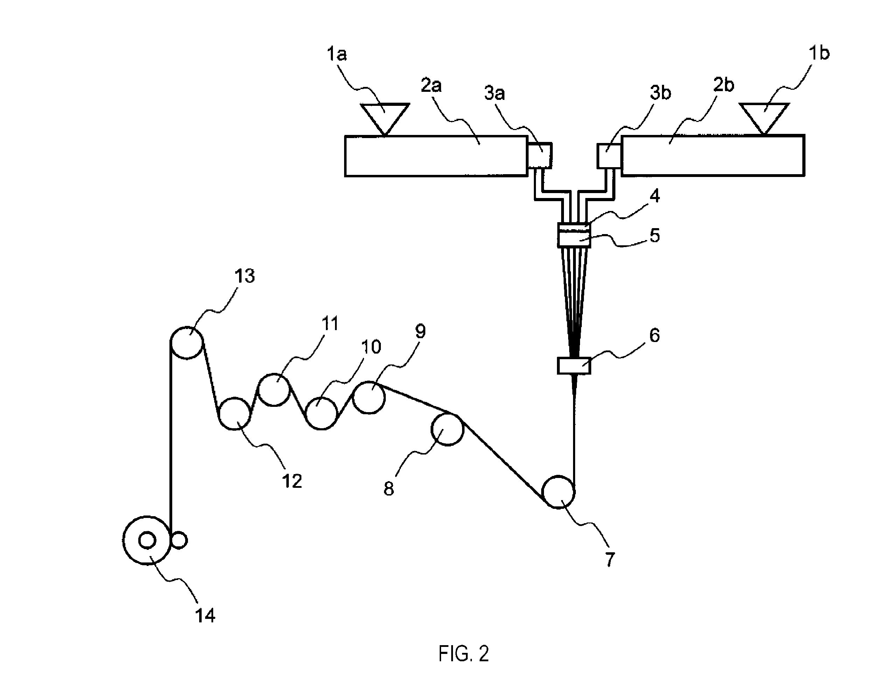

The PGA resin and the PLA resin in the molten state can be prepared by melt-kneading using an extruder or the like. For example, when producing an undrawn yarn using the melt spinning device illustrated in FIG. 2, the PGA resin and the PLA resin, in a pellet form or the like, are each independently loaded into extruders 2a and 2b from raw material hoppers 1a and 1b, and the PGA resin and the PLA resin are melt-kneaded.

The melt temperature of the PGA resin is preferably from 200 to 300°C and more preferably from 210 to 270°C. When the melt temperature of the PGA resin is less than the lower limit described above, the fluidity of the PGA resin is diminished, and the PGA resin is not discharged from the spinneret, which makes it difficult to form a fibrous composite. On the other hand, when the melt temperature exceeds the upper limit described above, the PGA resin tends to be discolored or pyrolyzed.

In addition, the melt temperature of the PLA resin is preferably from 170 to 280°C and more preferably from 210 to 240°C. When the melt temperature of the PLA resin is less than the lower limit described above, the fluidity of the PLA resin is diminished, and the PLA resin is not discharged from the spinneret, which makes it difficult to form a fibrous composite. On the other hand, when the melt temperature exceeds the upper limit described above, the PLA resin tends to be pyrolyzed.

In such a melt-kneading process, a stirrer, a continuous kneader, or the like can be used instead of an extruder, but it is preferable to use an extruder from the perspective that processing can be accomplished in a short period of time and that a smooth transition can be made to the subsequent discharge step.

(Discharge step)

In the discharge step of the present invention, the PLA resin in the molten state prepared as described above and the PGA resin in a molten state in an amount of 2 to 100 parts (preferably 3 to 100 parts and more preferably 5 to 80 parts) by mass per 1 part by mass of the D-lactic acid units in the PLA resin are discharged from a spinneret for composite fibers so as to form a fibrous composite comprising a phase containing the PGA resin in a molten state (called the "molten PGA resin phase" hereafter) and a phase containing the PLA resin in a molten state (called the "molten PLA resin phase" hereafter); the region formed by the molten PGA resin phase having a cross section with an area ratio of at most 50% (preferably at most 40%) (the region formed by the molten PGA resin phase more preferably has an area ratio of at most 50% (preferably at most 30%, more preferably at most 15%, and particularly preferably at most 10%)). For example, in the melt spinning device illustrated in FIG. 2, the PGA resin in a molten state is transferred to a spinneret 4 from the extruder 2a while regulating the volume using a gear pump 3a, and the PLA resin in a molten state is transferred to the spinneret 4 from the extruder 2b while regulating the volume using a gear pump 3b. The PGA resin and the PLA resin are then discharged from the hole of the spinneret 4 at a prescribed ratio and in an incompatible state to form a fibrous composite having the cross section and the side surface described above.

In a fibrous composite obtained in this way, the content of the PGA resin in the component constituting the molten PGA resin phase is preferably at least 60 mass%, more preferably at least 80 mass%, even more preferably at least 95 mass%, and particularly preferably 100%. In addition, the content of the molten PLA resin in the component constituting the PLA resin phase is preferably at least 60 mass%, more preferably at least 80 mass%, even more preferably at least 95 mass%, and particularly preferably 100%.

A conventionally known spinneret for composite fibers can be used as the spinneret 4 as long as a fibrous composite having the cross section and the side surface described above can be formed. For example, a concentric core-sheath type, an eccentric core-sheath type, a multicore type, a side-by-side type, a multiple-division type, a multilayer type, a radial type, or a composite type spinneret for composite fibers comprising two or more types thereof may be used as long as the region where the PGA resin in a molten state is discharged accounts for at most 50% in terms of area ratio (preferably at most 40%) in a hole. In addition, in the present invention, the number of holes and the hole diameter of such a spinneret for composite fibers are not particularly limited.

The discharge temperature of the PGA resin and the PLA resin in a molten state, that is, the discharge temperature of the composite in a molten state (spinneret temperature), is preferably from 210 to 280°C, and more preferably from 235 to 268°C. When the discharge temperature is less than the lower limit described above, the fluidity of the PGA resin and the PLA resin is diminished, and the resins are not discharged from the spinneret, which makes it difficult to form the fibrous composite. On the other hand, when the discharge temperature exceeds the upper limit described above, these resins tend to be prone to pyrolysis.

(Heat retaining step)

In the method for producing the water-disintegrable composite fiber of the present invention, the fibrous composite discharged from the spinneret is preferably retained in a heat sleeve 5 set to a temperature of 110°C or higher (preferably 120°C or higher) as necessary. Consequently, an undrawn yarn with low orientation is obtained, which enables drawing at a high draw ratio. As a result, the single fiber fineness of the drawn yarn becomes low, which tends to result in a composite fiber with an even higher tensile strength. In addition, the temperature inside the heat sleeve is preferably at most the melting point of the PGA resin. When the fibrous composite that is discharged from the spinneret is held in an atmosphere at a temperature exceeding the melting point of the PGA resin immediately after being discharged, the fibrous composite tends to be prone to break in some parts during being taken up, which tends to lead to a lack of productivity.

Inside the heat sleeve, it is not absolutely necessary for the temperature to be constant, and the atmosphere may have a temperature distribution. The temperature (temperature distribution) inside such a heat sleeve can be measured using an infrared laser thermometer or the like.

In the heat retaining step of the present invention, the fibrous composite formed in the discharge step is typically held in the heat sleeve 5 set to a prescribed temperature while being taken up. The take-up rate (spinning rate) of the fibrous composite is not particularly limited, but it is particularly preferable to take up the fibrous composite at a take-up rate such that the mass per unit length of a single fiber constituting an undrawn yarn (hereafter called an "undrawn single fiber") is $6 \times 10^{-4}$ g/m or greater (and more preferably $13 \times 10^{-4}$ g/m or greater). As a result, a composite fiber (undrawn yarn) which is not prone to break when drawn tends to be obtained. The mass per unit length of the undrawn single fiber changes depending on factors such as the hole diameter of the spinneret and the discharge volume per hole of the spinneret, so the take-up rate is set while taking these factors into consideration so as to achieve the desired mass per unit length of the undrawn single fiber.

(Storage step)

Since the water-disintegrable composite fiber of the present invention having the side surface described above demonstrates excellent unwindability in the undrawn yarn, the fiber can be wound around a bobbin or the like or housed in a tow can for storage. As a result, the undrawn yarn can be produced and stored in large quantities and can also be supplied stably, which enables the adjustment of the production of a drawn yarn.

The storage temperature is not particularly limited, but the undrawn yarn can be stably stored at 25 to 40°C. When stored at a temperature less than the lower limit described above, a cooling device is necessary, which is not preferable from an economic standpoint. That is, in the method of producing the water-disintegrable composite fiber of the present invention, low-temperature storage is unnecessary, so it is possible to cut the production cost (storage cost) when producing a drawn yarn. On the other hand, when stored at a temperature exceeding the upper limit described above, the agglutination of the undrawn composite fiber, which the PGA resin is exposed to the side surface of, may occur, and it is not preferable for such composite fiber.

The storage time in the method for producing the water-disintegrable composite fiber of the present invention is not particularly limited, but the fiber can be stored, for example, for 24 hours or longer in an environment with a temperature of 30°C and a relative humidity of 80%RH.

(Drawing step)

Since the water-disintegrable composite fiber of the present invention demonstrates excellent unwindability in the undrawn yarn, the undrawn yarn that is wound around a bobbin or the like or housed in a tow can for storage as described above can be drawn after being pulled out while being unwound. As a result, it is possible to obtain a drawn yarn comprising a PGA resin phase and a PLA resin phase; the region formed by the PGA resin phase having a cross section with an area ratio of at most 50% (preferably at most 40%) (the region formed by the PGA resin phase more preferably has an area ratio of at most 50%

(preferably at most 30%, more preferably at most 15%, and particularly preferably at most 10%); and the drawn yarn containing the PGA resin in an amount of from 2 to 100 parts by mass (preferably from 30 to 100 parts by mass and more preferably from 5 to 80 parts by mass) per 1 part by mass of the D-lactic acid units in the PLA resin.

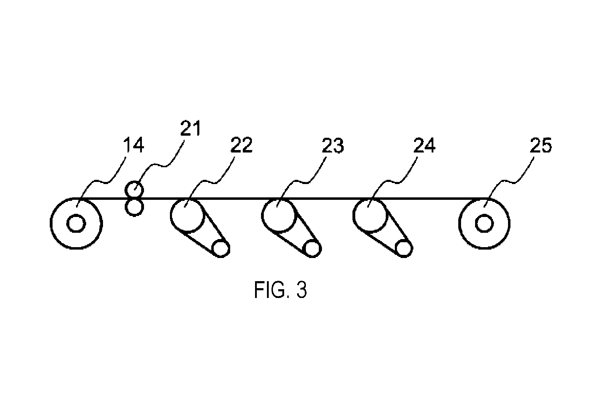

In the method of producing the water-disintegrable composite fiber of the present invention, the drawing temperature and draw ratio are not particularly limited and can be set appropriately in accordance with the desired physical properties and the like of the composite fiber, but the drawing temperature is preferably from 40 to 120°C, and the draw ratio is preferably from 2.0 to 6.0, for example. In addition, the drawing method is not particularly limited, and a conventionally known fiber drawing method can be employed. For example, when drawing an undrawn yarn using the drawing device illustrated in FIG. 3, an undrawn yarn is pulled out from a bobbin 14 via a feed roller 21, and after the undrawn yarn is drawn using rollers 22 and 23, the resulting drawn yarn is wound around a bobbin 25.

The drawn yarn that is obtained in this way may be used directly as a long fiber or may be cut so as to form a staple fiber. The cutting method is not particularly limited, and a publicly known cutting method used in the production method for a staple fiber can be employed. Such a staple fiber has a small diameter and a large specific surface area and therefore tends to exhibit excellent proppant dispersibility when added to a well treatment fluid.

In addition, by removing either the PGA resin or the PLA resin in the water disintegrable composite fiber of the present invention (in particular, the drawn yarn), it is possible to obtain fibers of various structures in accordance with the structure of the composite fiber, and this can be cut to form a staple fiber. For example, hollow fibers can be obtained by removing the PGA resin from concentric core-sheath type (FIG. 1A), eccentric core-sheath type (FIG. 1B), and multicore type (FIG. 1C) water-disintegrable composite fibers. On the other hand, by removing the PLA resin, it is possible to obtain a PGA resin single fiber having a smaller fiber diameter than the water-disintegrable composite fiber of the present invention. In addition, by removing either the PLA resin or the PGA resin, a single fiber of the PGA resin or the PLA resin having a semicircular cross section can be obtained from a side-by-side type water-disintegrable composite fiber (FIG. 1D), a single fiber of the PGA resin or the PLA resin having a fan-shaped cross section can be obtained from a multiple-division type water-disintegrable composite fiber (FIG. IE), or a single fiber of the PGA resin or the PLA resin having a flat cross section can be obtained from a multilayer type water-disintegrable composite fiber (FIG. 1F). A single fiber of the PGA resin having a radial cross section can be obtained by removing the PLA resin from a radial type water-disintegrable composite fiber (FIG. 1G).

Examples of methods for removing resins from the water-disintegrable composite fiber of the present invention include a method of separating the PGA resin phase and the PLA resin phase by peeling and a method of dissolving one of the resins by immersing the water-disintegrable composite fiber in a solvent that is a good solvent for one of the PGA resin or the PLA resin and a poor solvent for the other. The solvent used in the dissolution method is not particularly limited.

[Examples]

The present invention will be described in further detail hereafter based on working examples and comparative examples, but the present invention is not limited to the following examples. The physical properties of the resins and the properties of the undrawn yarn and staple fiber were measured with the following methods.

<Melting point and glass transition temperature>

The melting point and the glass transition temperature of the resin were measured in a nitrogen atmosphere at a heating rate of 20°C/min using a differential scanning calorimeter (DSC; "TC-15" manufactured by Mettler-Toledo International Inc.).

<Melt viscosity>

The melt viscosity of the resin was measured using a capirograph equipped with capillaries (1 mm in diameter x 10 mm in length) ("Capirograph 1-C" manufactured by Toyo Seiki Seisakusho). Specifically, approximately 20 g of the resin was introduced into the capirograph set to a measurement temperature of 240°C and was held for 5 minutes, and measurements were then performed under conditions with a shear rate of 122 sec$^{-1}$.

<Single fiber fineness>

90 m of a drawn yarn was hanked on a rewinder with a frame circumference of 1 m, and the absolute dry mass M was measured. The single fiber fineness was calculated from the following formula.

$$\text{Single fiber fineness (denier)} = 100 \times M/H$$

Here, M is the absolute dry mass (g) of the drawn yarn, and H is the number of holes (=24 holes) of the spinneret.

<Mass loss>

A staple fiber and deionized water were mixed in a vial with a volume of 50 ml so that the solid content concentration of the staple fiber was 2 mass%, and the resulting mixture was left to stand for 14 days in a gear oven set to 60°C or 80°C. After being left to stand, the mixture was subjected to gravity filtration using filter paper, and the residue on the filter paper was dried at 80°C. The mass after drying was measured, and the mass loss was determined.

<Proppant dispersibility>

Pseudo-mud was prepared by adding 0.2 g of xanthan gum ("XCD-Polymer" manufactured by Telnite Co., Ltd.) and 2.0 g of starch ("Telpolymer DX" manufactured by Telnite Co., Ltd.) to 100 ml of a 10 mass% NaCl aqueous solution and stirring for 1 minute. Staple fiber-dispersed pseudo-mud was prepared by adding 0.2 g of the staple fiber to the pseudo-mud and stirring for 1 minute. Proppant/staple fiber-dispersed pseudo-mud was prepared by adding 6 g of a proppant ("Bauxite 20/40" manufactured by SINTEX Co., Ltd.) to the staple fiber-dispersed pseudo-mud and stirring for 1 minute.

Next, 100 ml of the proppant/staple fiber-dispersed pseudo-mud was placed in a graduated cylinder with a volume of 100 ml, and the mark corresponding to the uppermost part of the pseudo-mud (mark before being left to stand) was read accurately. After the solution was left to stand for 1 hour, the mark corresponding to the uppermost part of the proppant (mark after being left to stand) was read accurately, and the proppant dispersibility was assessed in accordance with the following criteria based on the difference in the marks before and after being left to stand.

A (outstanding): mark difference of less than 40 ml.
B (excellent): mark difference of at least 40 ml and less than 55 ml.
C (good): mark difference of at least 55 ml and less than 70 ml.
D (poor): mark difference of at least 70 ml.

(Working Example 1)

<Production of a PGA/PLA composite undrawn yarn >

A PGA/PLA composite undrawn yarn was produced by using the melt spinning device illustrated in FIG. 2. A temperature-controllable heat sleeve 5 with a length of 150 mm and an inner diameter of 100 mm was mounted beneath a spinneret 4 for composite fibers of the melt spinning device. In the following explanations and drawings, elements that are identical or equivalent are labeled with the same symbols, and duplicate explanations will be omitted.

First, a pellet-formed PGA resin (made by the Kureha Corporation, weight average molecular weight: 180,000, glass transition temperature: 43°C, melting point: 220°C, melt viscosity (temperature: 240°C, shear rate: 122 sec$^{-1}$: 790 Pa•s, size: 3 mm in diameter $\times$ 3 mm in length) was loaded into a single-screw extruder 2a (made by Plagiken Co., Ltd., cylinder diameter: 30 mm, L/D=24) from a raw material hopper 1a and melted at 215 to 250°C. The cylinder temperature of the extruder 2a was set to 215 to 250°C, and the adapter temperature, the gear pump temperature, and the spin pack temperature were set to 250°C.

On the other hand, a pellet-formed PLA resin ("6302D" made by Nature Works Co., Ltd., D-form ratio: 9.5%, glass transition temperature: 55 to 60°C, melting point: 155 to 170°C, melt viscosity (temperature: 240°C, shear rate: 122 sec$^{-1}$: 290 Pa•s) was loaded into a single-screw extruder 2b (made by Plagiken Co., Ltd., cylinder diameter: 25 mm, L/D=24) from a raw material hopper 1b and melted at 170 to 250°C. The cylinder temperature of the extruder 2b was set to 170 to 200°C, the adapter temperature and the gear pump temperature were set to 200°C, and the spin pack temperature was set to 250°C.

The molten PGA resin and the molten PLA resin were continuously supplied to the spinneret 4 (for core-sheath type composite fibers; hole size: 0.40 mm, 24 holes, temperature: 250°C) while regulating the volume using gear pumps 3a and 3b, respectively, so that the cross-sectional area ratio of the core part to the sheath part at the discharge port was core part/sheath part = 25/75, and as a result, the core part of the composite fiber formed the PGA resin phase and the sheath part formed the PLA resin phase. After the resins were discharged from the spinneret 4 to form a fibrous PGA/PLA composite, the composite was passed through a heat sleeve 5 set to 120°C. The fibrous PGA/PLA composite was then air-cooled, and the resulting PGA/PLA composite undrawn yarn was coated with an oiling agent for fibers ("Lurol", made by the GOULSTON). The yarn was taken up with a first take-up roller 7 at a circumferential speed of 1,000 m/min, and a core-sheath type PGA/PLA composite undrawn yarn (core part: PGA resin, sheath part: PLA resin) was wound around a bobbin 14 every 5,000 m via second to seventh take-up rollers 8 to 13. The content of the PGA resin in the resulting core-sheath type PGA/PLA composite undrawn yarn is 3.5 parts by mass per 1 part by mass of the D-lactic acid units in the PLA resin.

<Production and evaluation of a PGA/PLA composite drawn yarn>

A bobbin around which the PGA/PLA composite undrawn yarn was wound was mounted on the drawing device illustrated in FIG. 3, and this PGA/PLA composite undrawn yarn was unwound and drawn from the bobbin 14 via the feed roller 21 using a first heating roller 22 and a second heating roller 23. A core-sheath type PGA/PLA composite drawn yarn (core part: PGA resin, sheath part: PLA resin) was wound around a bobbin 25 via a third heating roller 24. The drawing temperature was set to 65°C, and the draw ratio was set to 2.2 times by adjusting the circumferential speeds of the first and second heating rollers. The single fiber fineness of the resulting PGA/PLA composite drawn yarn was measured in accordance with the evaluation method described above. The results are shown in Table 1.

<Production and evaluation of a PGA/PLA staple fiber>

A PGA/PLA composite drawn yarn was cut using an EC cutter so as to produce a core-sheath type PGA/PLA staple fiber (core part: PGA resin, sheath part: PLA resin). The mass loss and proppant dispersibility of the resulting PGA/PLA staple fiber were measured in accordance with the evaluation methods described above. These results are shown in Table 1.

(Working Example 2)

A core-sheath type PGA/PLA composite undrawn yarn (core part: PGA resin, sheath part: PLA resin) was produced in the same manner as in Working Example 1 with the exception of regulating the volume of the molten PGA resin and the molten PLA resin so that the cross-sectional area ratio of the core part to the sheath part of the discharge port was core part/sheath part = 35/65. The content of the PGA resin in the resulting core-sheath type PGA/PLA composite undrawn yarn is 5.7 parts by mass per 1 part by mass of the D-lactic acid units in the PLA resin.
A core-sheath type PGA/PLA composite drawn yarn (core part: PGA resin, sheath part: PLA resin) was then produced in the same manner as in Working Example 1 with the exception of changing the draw ratio to 2.5 times, and a core-sheath type PGA/PLA staple fiber (core part: PGA resin, sheath part: PLA resin) was further produced. The single fiber fineness of the resulting PGA/PLA composite drawn yarn and the mass loss and proppant dispersibility of the PGA/PLA staple fiber were measured in accordance with the evaluation methods described above. These results are shown in Table 1.

(Working Example 3)

A core-sheath type PGA/PLA composite undrawn yarn (core part: PGA resin, sheath part: PLA resin) was produced in the same manner as in Working Example 1 with the exception of regulating the volume of the molten PGA resin and the molten PLA resin so that the cross-sectional area ratio of the core part to the sheath part at the discharge port was core part/sheath part = 50/50. The content of the PGA resin in the resulting core-sheath type PGA/PLA composite undrawn yarn is 10.5 parts by mass per 1 part by mass of the D-lactic acid units in the PLA resin.
A core-sheath type PGA/PLA composite drawn yarn (core part: PGA resin, sheath part: PLA resin) was then produced in the same manner as in Working Example 1 with the exception of changing the draw ratio to 2.5 times, and a core-sheath type PGA/PLA staple fiber (core part: PGA resin, sheath part: PLA resin) was further produced. The single fiber fineness of the resulting PGA/PLA composite drawn yarn and the mass loss and proppant dispersibility of the PGA/PLA staple fiber were measured in accordance with the evaluation methods described above. These results are shown in Table 1.

(Working Example 4)

A core-sheath type PGA/PLA composite undrawn yarn (core part: PGA resin, sheath part: PLA resin) was produced in the same manner as in Working Example 1 with the exception of changing the resin constituting the sheath part to a pellet-formed PLA resin having a D-form ratio of 1.4% ("4032D" made by Nature Works Co., Ltd., glass transition temperature: 57°C, melting point: 160 to 170°C, melt viscosity (temperature: 240°C, shear rate: 122 sec$^{-1}$: 500 Pa•s) and regulating the volume of the molten PGA resin and the molten PLA resin so that the cross-sectional area ratio of the core part to the sheath part at the discharge port was core part/sheath part = 20/80. The content of the PGA resin in the resulting core-sheath type PGA/PLA composite undrawn yarn is 17.9 parts by mass per 1 part by mass of the D-lactic acid units in the PLA resin.

A core-sheath type PGA/PLA composite drawn yarn (core part: PGA resin, sheath part: PLA resin) was then produced in the same manner as in Working Example 1 with the exception of changing the draw ratio to 2.8 times, and a core-sheath type PGA/PLA staple fiber (core part: PGA resin, sheath part: PLA resin) was further produced. The single fiber fineness of the resulting PGA/PLA composite drawn yarn and the mass loss and proppant dispersibility of the PGA/PLA staple fiber were measured in accordance with the evaluation methods described above. These results are shown in Table 1.

(Working Example 5)

A core-sheath type PGA/PLA composite undrawn yarn (core part: PGA resin, sheath part: PLA resin) was produced in the same manner as in Working Example 4 with the exception of regulating the volume of the molten PGA resin and the molten PLA resin so that the cross-sectional area ratio of the core part to the sheath part at the discharge port cross section was core part/sheath part = 35/65. The content of the PGA resin in the resulting core-sheath type PGA/PLA composite undrawn yarn is 38.5 parts by mass per 1 part by mass of the D-lactic acid units in the PLA resin.

A core-sheath type PGA/PLA composite drawn yarn (core part: PGA resin, sheath part: PLA resin) was then produced in the same manner as in Working Example 4 with the exception of changing the draw ratio to 3.0 times, and a core-sheath type PGA/PLA staple fiber (core part: PGA resin, sheath part: PLA resin) was further produced. The single fiber fineness of the resulting PGA/PLA composite drawn yarn and the mass loss and proppant dispersibility of the PGA/PLA staple fiber were measured in accordance with the evaluation methods described above. These results are shown in Table 1.

(Working Example 6)

A core-sheath type PGA/PLA composite undrawn yarn (core part: PGA resin, sheath part: PLA resin) was produced in the same manner as in Working Example 4 with the exception of regulating the volume of the molten PGA resin and the molten PLA resin so that the cross-sectional area ratio of the core part to the sheath part of the discharge port was core part/sheath part = 10/90. The content of the PGA resin in the resulting core-sheath type PGA/PLA composite undrawn yarn is 7.9 parts by mass per 1 part by mass of the D-lactic acid units in the PLA resin.

A core-sheath type PGA/PLA composite drawn yarn (core part: PGA resin, sheath part: PLA resin) was then produced in the same manner as in Working Example 4 with the exception of changing the draw ratio to 2.3 times, and a core-sheath type PGA/PLA staple fiber (core part: PGA resin, sheath part: PLA resin) was further produced. The single fiber fineness of the resulting PGA/PLA composite drawn yarn and the mass loss and proppant dispersibility of the PGA/PLA staple fiber were measured in accordance with the evaluation methods described above. These results are shown in Table 1.

(Comparative Example 1)

A PLA resin undrawn yarn was produced in the same manner as in Working Example 1 with the exception that a PGA resin was not used and that a spinneret for single fibers (hole size: 0.40 mm, 24 holes) was used as the spinneret 4. An attempt was then made to produce a PLA resin drawn yarn by changing the draw ratio to 1.5 times, but the yarn broke when the yarn was drawn, and a PLA resin drawn yarn was not obtained.

(Comparative Example 2)

After a PLA resin undrawn yarn was produced in the same manner as in Comparative Example 1, a PLA resin drawn yarn was produced in the same manner as in Working Example 1 with the exception of changing the draw ratio to 1.3 times, and a PLA resin staple fiber was further produced. The single fiber fineness of the resulting PLA resin drawn yarn and the mass loss and proppant dispersibility of the PLA resin staple fiber were measured in accordance with the evaluation methods described above. These results are shown in Table 2.

(Comparative Example 3)

A PLA resin undrawn yarn was produced in the same manner as in Working Example 4 with the exception that a PGA resin was not used and that a spinneret for single fibers (hole size: 0.40 mm, 24 holes) was used as the spinneret 4. An attempt was then made to produce a PLA resin drawn yarn by changing the draw ratio to 1.7 times, but the yarn broke when the yarn was drawn, and a PLA resin drawn yarn was not obtained.

(Comparative Example 4)

A core-sheath type PGA/PLA composite undrawn yarn (core part: PGA resin, sheath part: PLA resin) was produced in the same manner as in Working Example 1 with the exception of regulating the volume of the molten PGA resin and the molten PLA resin so that the cross-sectional area ratio of the core part to the sheath part at the discharge port was core part/sheath part = 10/90. The content of the PGA resin in the resulting core-sheath type PGA/PLA composite undrawn yarn is 1.2 parts by mass per 1 part by mass of the D-lactic acid units in the PLA resin.

A core-sheath type PGA/PLA composite drawn yarn (core part: PGA resin, sheath part: PLA resin) was then produced in the same manner as in Working Example 1 with the exception of changing the draw ratio to 1.3 times, and a core-sheath type PGA/PLA staple fiber (core part: PGA resin, sheath part: PLA resin) was further produced. The single fiber fineness of the resulting PGA/PLA composite drawn yarn and the mass loss and proppant dispersibility of the PGA/PLA staple fiber were measured in accordance with the evaluation methods described above. These results are shown in Table 2.

Comparative Example 5

A core-sheath type PGA/PLA composite undrawn yarn (core part: PGA resin, sheath part: PLA resin) was produced in the same manner as in Working Example 4 with the exception of regulating the volume of the molten PGA resin and the molten PLA resin so that the cross-sectional area ratio of the core part to the sheath part at the discharge port was core part/sheath part = 2/98. The content of the PGA resin in the resulting core-sheath type PGA/PLA composite undrawn yarn is 1.5 parts by mass per 1 part by mass of the D-lactic acid units in the PLA resin. An attempt was then made to produce a PGA/PLA resin drawn yarn by changing the draw ratio to 1.7 times, but the yarn broke when the yarn was drawn, and a PGA/PLA resin drawn yarn was not obtained.

[Table 1]

|  | Working Example 1 | Working Example 2 | Working Example 3 |
|---|---|---|---|
| D-form ratio (%) of PLA | 9.5 | 9.5 | 9.5 |
| Fiber structure | Core-sheath type Core part: PGA Sheath part: PLA | Core-sheath type Core part: PGA Sheath part: PLA | Core-sheath type Core part: PGA Sheath part: PLA |
| Area ratio (%) of the PGA phase of the cross section | 25 | 35 | 50 |
| Area ratio (%) of the PGA phase of the side surface | 0 | 0 | 0 |
| D-form content (mass%) in the composite fiber | 7.1 | 6.2 | 4.8 |
| PGA content (parts by mass) per 1 part by mass of the D-lactic acid units in the PLA resin of the composite fiber | 3.5 | 5.7 | 10.5 |
| Draw ratio (times) | 2.2 | 2.5 | 2.5 |
| Single fiber fineness (denier) | 2.0 | 1.3 | 1.4 |
| 60°C mass loss (%) | 25.0 | 27.4 | 34.2 |
| 80°C mass loss (%) | 90.9 | 92.3 | 96.0 |
| Proppant dispersibility | B | A | A |

[Table 1] (Continued)

|  | Working Example 4 | Working Example 5 | Working Example 6 |
|---|---|---|---|
| D-form ratio (%) of PLA | 1.4 | 1.4 | 1.4 |
| Fiber structure | Core-sheath type Core part: PGA Sheath part: PLA | Core-sheath type Core part: PGA Sheath part: PLA | Core-sheath type Core part: PGA Sheath part: PLA |
| Area ratio (%) of the PGA phase of the cross section | 20 | 35 | 10 |
| Area ratio (%) of the PGA phase of the side surface | 0 | 0 | 0 |
| D-form content (mass%) in the composite fiber | 1.1 | 0.9 | 1.3 |
| PGA content (parts by mass) per 1 part by mass of the D-lactic acid units in the PLA resin of the composite fiber | 17.9 | 38.5 | 7.9 |
| Draw ratio (times) | 2.8 | 3.0 | 2.3 |
| Single fiber fineness (denier) | 1.5 | 1.5 | 1.9 |
| 60°C mass loss (%) | 18.3 | 26.6 | 14.3 |

| 80°C mass loss (%) | 88.5 | 91.4 | 81.5 |
| Proppant dispersibility | A | A | B |

[Table 2]

| | Comparative Example 1 | Comparative Example 2 | Comparative Example 3 |
|---|---|---|---|
| D-form ratio (%) of PLA | 9.5 | 9.5 | 1.4 |
| Fiber structure | PLA Single fiber | PLA Single fiber | PLA Single fiber |
| Area ratio (%) of the PGA phase of the cross section | 0 | 0 | 0 |
| Area ratio (%) of the PGA phase of the side surface | 0 | 0 | 0 |
| D-form content (mass%) in the composite fiber | 9.5 | 9.5 | 1.4 |
| PGA content (parts by mass) per 1 part by mass of the D-lactic acid units in the PLA resin of the composite fiber | 0 | 0 | 0 |
| Draw ratio (times) | 1.5 | 1.3 | 1.7 |
| Single fiber fineness (denier) | - | 3.5 | - |
| 60°C mass loss (%) | - | 12.4 | - |
| 80°C mass loss (%) | - | 76.5 | - |
| Proppant dispersibility | - | D | - |

[Table 2] (Continued)

| | Comparative Example 4 | Comparative Example 5 |
|---|---|---|
| D-form ratio (%) of PLA | 9.5 | 1.4 |
| Fiber structure | Core-sheath type Core part: PGA Sheath part: PLA | Core-sheath type Core part: PGA Sheath part: PLA |
| Area ratio (%) of the PGA phase of the cross section | 10 | 2 |
| Area ratio (%) of the PGA phase of the side surface | 0 | 0 |
| D-form content (mass%) in the composite fiber | 8.6 | 1.4 |
| PGA content (parts by mass) per 1 part by mass of the D-lactic acid units in the PLA resin of the composite fiber | 1.2 | 1.5 |
| Draw ratio (times) | 1.3 | 1.7 |
| Single fiber fineness (denier) | 3.5 | - |
| 60°C mass loss (%) | 14.9 | - |
| 80°C mass loss (%) | 80.1 | - |

| Proppant dispersibility | D | - |

As is clear from the results shown in Table 1, it can be seen that a core-sheath type composite undrawn yarn (core part: PGA resin, sheath part: PLA resin) containing a prescribed amount of a PGA resin with respect to the D-lactic acid units in the PLA resin can be drawn at a ratio of 2 or more times and that the single fiber fineness of the core-sheath type composite drawn yarn (core part: PGA resin, sheath part: PLA resin) can be controlled to 2.0 denier or lower. In addition, it was confirmed that a core-sheath composite drawn yarn with such low fineness has excellent proppant dispersibility.

On the other hand, as is clear from the results shown in Table 2, it can be seen that an undrawn yarn formed from a PLA resin alone is prone to break even when drawn at a low ratio of 1.7 times or lower (Comparative Examples 1 and 3). Further, it can be seen that when the draw ratio is reduced so that fibers of the yarn do not break, it is difficult to control the single fiber fineness to 3.0 denier or lower (Comparative Example 2). In addition, even in the case of a core-sheath type composite undrawn yarn in which the core part is formed from a PGA resin and the sheath part is formed from a PLA resin, when the content of the PGA resin with respect to the D-lactic acid units in the PLA resin is low, it is difficult to draw the yarn at a high ratio, and it was difficult to obtain a core-sheath type composite drawn yarn (core part: PGA resin, sheath part: PLA resin) with excellent proppant dispersibility.

Industrial applicability

As described above, with the present invention, it is possible to obtain a water-disintegrable composite undrawn yarn which can be drawn at a high ratio. Accordingly, by drawing the water-disintegrable composite undrawn fiber of the present invention at a high ratio, it is possible to obtain a water-disintegrable drawn yarn with a small single fiber fineness (that is, a small diameter). Further, a the water-disintegrable composite staple fiber of the present invention formed by cutting the water-disintegrable drawn yarn of the present invention has a small diameter and a large specific surface area and therefore demonstrates excellent proppant dispersibility when added to a well treatment fluid.

The water-disintegrable composite staple fiber of the present invention is useful for applications to the drilling or completion field of oil and gas recovery from the perspective of productivity improvement, drilling cost reduction, reduction in damage to subterranean formation, and reduction in environmental burden. For example, the fiber is useful as an additive for improving the productivity of a subterranean formation with low permeability. One method used for shale gas or shale oil recovery is hydraulic fracturing, and this fiber is useful at the time of hydraulic fracturing as an auxiliary material for efficiently transporting proppants such as sand or for efficiently refluxing a fluid containing proppants such as sand.

Furthermore, the fiber is useful as an auxiliary material for uniformly treating subterranean formation in acid treatment using hydrochloric acid or the like, which is typically used in drilling or completion of oil and gas recovery. Specifically, by using a water-disintegrable composite staple fiber, it is possible to seal the subterranean formation through which fluids flow easily and to adjust the formation so that fluids flow at locations where fluid flow is desirable, and since the material decomposes at the time of production, this means that the productivity is not inhibited. Such a sealing function can also be applied to improve the product recovery efficiency by temporarily sealing holes intentionally formed in subterranean formation, in particular, in production layers from which petroleum or gas can be obtained.

Other related applications for which the fiber is useful include applications for preventing the clogging of screens using disintegrability by utilizing the water-disintegrable composite fiber to form the cake layer formed during drilling, and applications for preventing lost circulation of water or mud into subterranean formation with high permeability or natural holes by adding a water-disintegrable composite fiber staple fiber to mud water for drilling. In applications in which the fiber is added to mud for drilling, it has the effect of reducing the viscosity of mud and increasing the fluidity, by the releasing effect of acids released after decomposition of the fiber. Furthermore, by adding the water-disintegrable composite fiber to mud for drilling or completion, it is possible to reduce the amount of water or sand used, which makes it possible to reduce the drilling cost. In all of these applications, the water-disintegrable composite staple fiber has a disintegrating property, which yields the advantage that there is no damage to subterranean formation.

REFERENCE SIGNS LIST

A: PGA resin phase
B: PLA resin phase
1a, 1b: Raw material hoppers
2a, 2b: Extruders

3a, 3b: Gear pumps
4: Spinneret (spinning nozzle)
5: Heat sleeve
6: Oiling agent application device
7-13: First through seventh take-up rollers
14: Undrawn yarn bobbin
21: Feed roller
22: First heating roller
23: Second heating roller
24: Third heating roller
25: Drawn yarn bobbin

**Claims**

1. A water-disintegrable composite fiber comprising a phase containing a polyglycolic acid resin and a phase containing a polylactic acid resin with a D-lactic acid unit ratio of at least 1.0%;
   the two phases extending continuously in a lengthwise direction respectively; and
   the composite fiber having a cross-sectional area formed by the phase containing the polyglycolic acid resin having an area ratio of at most 50 %; and
   the content of the polyglycolic acid resin being from 2 to 100 parts by mass per 1 part by mass of the D-lactic acid units in the polylactic acid resin.

2. The water-disintegrable composite fiber according to claim 1, wherein the water-disintegrable composite fiber has a side surface in which a surface area formed by the phase containing the polyglycolic acid resin has an area ratio of at most 50%.

3. The water-disintegrable composite fiber according to claim 1 or 2, wherein the water-disintegrable composite fiber has at least one type of structure selected from a core-sheath type, a multicore type, a side-by-side type, a multiple-division type, a multilayer type, and a radial type.

4. The water-disintegrable composite fiber according to any one of claims 1 to 3, wherein the fiber is an undrawn fiber.

5. The water-disintegrable composite fiber according to any one of claims 1 to 3, wherein the fiber is a drawn fiber.

6. The water-disintegrable composite fiber according to claim 5, wherein a single fiber fineness is 3.0 denier or less.

7. A fiber obtained by removing either the polyglycolic acid resin or the polylactic acid resin from the water-disintegrable composite fiber described in claim 5 or 6.

8. A water-disintegrable composite staple fiber obtained by cutting the water-disintegrable composite fiber described in claim 5 or 6.

9. The water-disintegrable composite staple fiber according to claim 8, wherein the staple fiber is used as an additive at a time of drilling or completion of oil or gas recovery.

10. A method for producing a water-disintegrable composite fiber, the method comprising the steps of:

    forming a fibrous composite by continuously discharging a polylactic acid resin having a D-lactic acid unit ratio of at least 1.0% and from 2 to 100 parts by mass of a polyglycolic acid resin per 1 part by mass of D-lactic acid units in the polylactic acid resin from a spinneret for composite fibers, each of the resins being discharged in a molten state; and
    cooling the fibrous composite to obtain an undrawn yarn comprising a phase containing the polyglycolic acid resin and a phase containing the polylactic acid resin, the undrawn yarn having a cross section in which an area formed by the phase containing the polyglycolic acid resin has an area ratio of at most 50%.

11. A method for producing a water-disintegrable composite fiber, the method comprising the step of:

drawing an undrawn yarn obtained by the production method described in claim 10 so as to obtain a drawn yarn comprising the phase containing the polyglycolic acid resin and the phase containing the polylactic acid resin, the drawn yarn having a cross section in which an area formed by the phase containing the polyglycolic acid resin has an area ratio of at most 50%, and the drawn yarn containing from 2 to 100 parts by mass of the polyglycolic acid resin per 1 part by mass of the D-lactic acid units in the polylactic acid resin.

12. A method of producing a water-disintegrable composite fiber, the method comprising the step of cutting a drawn yarn obtained by the production method described in claim 11 to obtain a water-disintegrable composite staple fiber.

FIG. 1A

FIG. 1B

FIG. 1C

FIG. 1D

FIG. 1E

FIG. 1F

FIG. 1G

FIG. 2

FIG. 3

## INTERNATIONAL SEARCH REPORT

| International application No. |
| --- |
| PCT/JP2013/074730 |

**A. CLASSIFICATION OF SUBJECT MATTER**
*D01F8/14(2006.01)i*

According to International Patent Classification (IPC) or to both national classification and IPC

**B. FIELDS SEARCHED**

Minimum documentation searched (classification system followed by classification symbols)
D01F8/00-8/18

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2003-339849 A (Samyang Corp.), 02 December 2003 (02.12.2003), claims 1, 4 & EP 1348449 A1 claims 1, 4 & US 2003/0187476 A1 & US 2004/0098049 A1 & WO 2003/083191 A1 & DE 60300832 T & DE 60300832 D & AT 297763 T & BR 215669 A & ES 2240878 T & KR 10-2003-0078669 A & ZA 200407847 A & CN 1623016 A & AU 2002324358 A & MX PA04009439 A | 1-12 |

☒  Further documents are listed in the continuation of Box C.　　☐  See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 06 November, 2013 (06.11.13) | 19 November, 2013 (19.11.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/074730

C (Continuation).  DOCUMENTS CONSIDERED TO BE RELEVANT

| Category* | Citation of document, with indication, where appropriate, of the relevant passages | Relevant to claim No. |
|---|---|---|
| A | JP 52-84889 A  (Asahi Chemical Industry Co., Ltd.), 14 July 1977 (14.07.1977), claims (Family: none) | 1-12 |
| A | JP 2011-506791 A  (3M Innovative Properties Co.), 03 March 2011 (03.03.2011), claims; paragraph [0010] & WO 2009/079310 A1 claims; paragraph [0010] & US 2010/0272994 A1    & EP 2231907 A1 & CA 2709182 A          & CN 101903577 A & KR 10-2010-0108376 A  & EA 201000811 A | 1-12 |
| P,A | WO 2013/129240 A1  (Kureha Corp.), 06 September 2013 (06.09.2013), claims (Family: none) | 1-12 |

Form PCT/ISA/210 (continuation of second sheet) (July 2009)

**EP 2 896 726 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011506791 PCT
- JP H07133511 B
- JP 2000265333 A

- JP 2007119928 A
- JP H07133511 A